# EUROPEAN PATENT SPECIFICATION

(11) **EP 1 676 020 B1**
(45) Date of publication and mention of the grant of the patent: **09.07.2008**
(21) Application number: 03758025.5
(22) Date of filing: 20.10.2003
(51) Int. Cl.: F02B 37/16, F02B 37/18, F02M 25/07

(54) **ADJUSTABLE VALVE, IN PARTICULAR A RECIRCULATION VALVE FOR A TURBOCHARGER**
EINSTELLBARES VENTIL, INSBESONDERE EIN RÜCKFÜHRVENTIL FÜR EINEN TURBOLADER
SOUPAPE REGLABLE, EN PARTICULIER SOUPAPE DE RECIRCULATION POUR TURBOCOMPRESSEUR

(43) Date of publication of application: 05.07.2006
(73) Proprietor: Honeywell International, Inc., Morristown, New Jersey 07962 (US)
(72) Inventor: NOELLE, Philippe, c/o Honeywell Garett, F-88150 Thaon-Les-Vorges (FR)
(74) Representative: TBK-Patent
(86) International application number: PCT/EP2003/011599
(87) International publication number: WO 2005/042941

(56) References cited:
- GB-A- 216 136
- GB-A- 515 877
- GB-A- 919 667
- GB-A- 2 042 090
- US-A- 4 517 803
- US-A- 5 540 417

## Description

The present invention relates to an adjustable valve, in particular to an adjustable recirculation valve used in turbocharger boosting systems.

According to document US-4,517,803 there is disclosed a turbocharger comprising a valve emitting selective recirculating flow from a pressure compressor exhaust to the inlet of a compressor. The valve comprises a coil spring and a coil spring retainer provided with a threaded portion for adjustment of its axial position.

In document US-5,540,417 there is further disclosed an adjustable spring assembly in which the acting length of a coil spring is adjusted by cylindrical inserts threaded into the spring.

Document GB216,136 discloses a valve with a spring threaded on a retainer. The spring-tension is adjusted by moving the retainer upward or downward on a threaded sleeve.

It is an object of the present invention to provide an improved adjustable valve, in particular an adjustable recirculation valve for a turbocharger.

This object is achieved by the combination of the features set forth in claim 1. According to the invention the adjustable valve comprises a valve member for controlling the fluid flow through the valve and a coil spring acting on the valve member, wherein the spring has a portion of a reduced diameter by means of which the spring is threaded on a retainer so as to adjust a calibrating pre-tension acting on the valve member.

Preferably embodiments of the invention are defined in the dependent claims. According to one of these embodiments the spring is also detachably threaded on the valve member. According to another embodiment the spring is fixedly fitted on the valve member.

In the following the invention is illustrated by an embodiment with reference to the enclosed figures.

In the figures:
Fig. 1 shows a cross-sectional view of an adjustable recirculation valve according to the invention; and
Figs. 2 and 3 show different adjustment positions of the adjustable recirculation valve in Fig. 1.

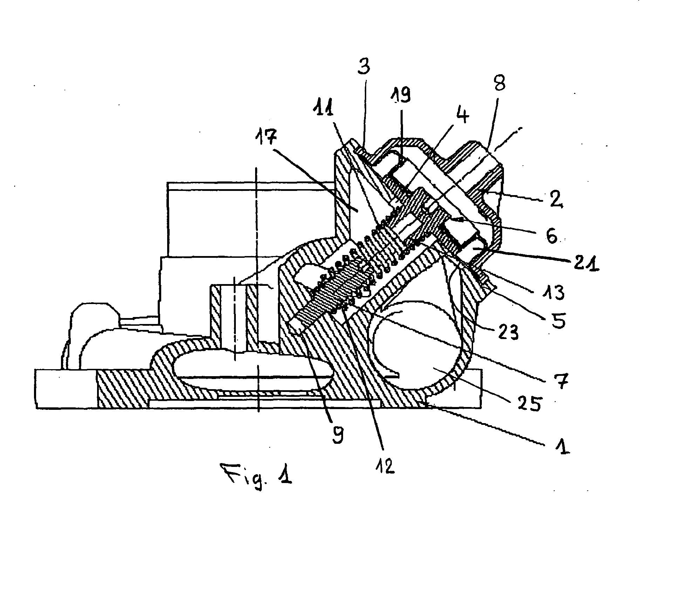

As shown in Fig. 1 an adjustable recirculation valve comprises a basic housing part 1 constituted by the housing of the compressor side of a turbocharger which is not particularly shown in this figure. The valve further comprises a valve cover 2 fixedly mounted to the housing part 1 by means of fixing screws not particularly shown in Fig. 1. For this purpose the fixing screws are provided with plain washers for fixing a flange portion 3 of the cover 2 in a circular recess formed in a corresponding mounting flange 5 of the housing part 1.

In the mounting flange 5 there is provided a circular opening 4 communicating the compressor outlet with the compressor inlet as will be described in particular hereinafter. The opening 4 is covered by a piston-like valve member 6 abutted against the mounting flange around the opening 4 by means of a spring device.

The spring device comprises a spring retainer formed as a screw member 7 being screwed in a hole 9 of the housing 1 extending substantially concentrically to the circular opening 4. The circumferential surface of the upper part of the screw member 7 facing the valve cover is threaded such that this part matches the helical form of the coils at the end portion of a coil spring 11. The end portion of the coil spring 11 has a diameter which is smaller than the diameter of the rest of the coil spring so that no matter to which extend the screw member 7 is threaded into the inner space of the spring 11 only the limited number of coils constituting the end portion of the spring remain in engagement with the screw member 7. Thus, the end portion of the spring serves as a coupling member for adjusting the axial position of the spring 11 in relation to the screw member 7 without influencing the total number of functionally active spring coils.

The upper part of the coil spring 11, i.e. the end of the spring facing the valve member 6, is fitted or fixedly screwed onto a cylindrical protrusion 13 of the valve member 6 so that the spring remains tensioned for exercising a predetermined preload on the valve member in its closed position. The spring device is accommodated in a compartment 17 which is communicated with the compressor inlet.

On the top of the valve member 6 there is attached a hat-like diaphragm 19 the peripheral portion of which is sandwiched between the cover 2 and the flange portion 5 as shown in Fig. 1. Between the diaphragm 19 and the bottom of the flange portion 5 there is formed a circumferential escape channel 21 which by means of an opening 23 in the flange portion 5 remains permanently communicated with another compartment 25 of the housing 1 connected to the compressor outlet.

The function of the valve will be explained in the following with reference to the Figures 1 to 3.

When the throttle of a gas line engine is suddenly closed a high pressure is created upstream the throttle and communicated to the compressor outlet which is further communicated to the compartment 25 of the recirculation valve shown in Fig. 1. In order to prevent the compressor of the turbocharger from going into surge, the increasing pressure in the compartment 25 pushes up the valve member 6 in addition to the vacuum in cover 2 created by connecting the downstream side of the throttle to the cover inlet 8 by means of a hose not particularly shown in Fig. 1. Thus, the highly compressed air can flow out of the compartment 25 into the circumferential escape channel 21 and finally escape through the opening 4 into the neighbor compartment 17 communicated with the compressor inlet.

Because of the construction of the recirculation valve it is possible to calibrate the valve by varying the pre-load of the spring 11. When the spring 11 is screwed on the threaded portion of the screw 7 the coils of the spring tend to open due to the frictional contact between the end portion of the spring having a reduced diameter. However, when an unscrew force is applied to the coil spring, the coils of the spring tend to tighten on the thread and create a self-locking effect, thus avoiding that the spring is disengaged from the screw 7. Hence, by using such a spring assembly, the adjustable tension calibrating system can be assigned in addition a vibration proof efficiency.

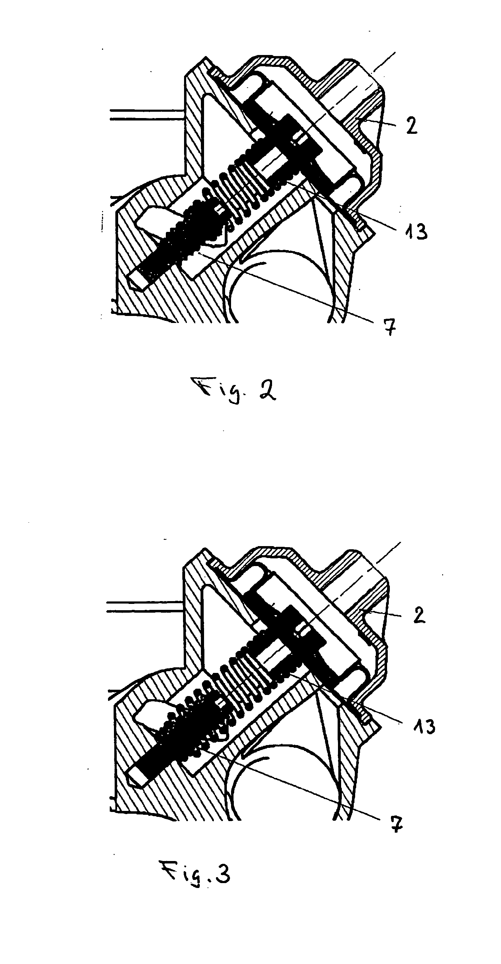

In the adjustment position shown in Fig. 2 the spring 7 is screwed onto the screw 7 with a minimum of turns so that the pre-tensioning, i.e. a pre-loading of the spring becomes a minimum. In this position the valve member or piston 6 can easily be pushed up by the pressure in the compartment 25.

In its fully screwed position shown in Fig. 3 the spring 7 is tensioned as to the possible maximum, thus also causing a maximum pre-load which have to be obviated by the pressure in the compartment 25.

As can be seen in the Figures the recirculation valve according to the invention can be easily disassembled and the axial position of the screw 7 and the coil spring 11 can be easily adjusted for calibration purposes.

## Claims

1. An adjustable valve comprising a piston member (6) for regulating the fluid flow through the valve, wherein said valve comprises a coil spring (11) acting on said piston member (6) and being supported on an adjustable retainer (7) threaded into said spring (11)
**characterized in that**
the spring (11) is adjustably threaded on the retainer (7) by means of a portion (12) of a reduced diameter which serves as a coupling member for adjusting the axial position of the spring (11) relation to said retainer (7) so that the calibrating pre-tension of the spring (11) is adjustable without thereby influencing the acting length of the spring.

2. An adjustable valve according to claim 1,
**characterized in that** said spring (11) is also threaded on said piston member (6).

3. An adjustable valve according to claim 1,
**characterized in that** said spring (11) is fixedly fitted on said piston member (6).

## Patentansprüche

1. Einstellbares Ventil mit einem Kolbenbauteil (6) zum Regulieren der Fluidströmung durch das Ventil, wobei das Ventil eine Schraubenfeder (11) hat, die auf das Kolbenbauteil (6) wirkt und an einer einstellbaren Halterung (7) abgestützt ist, die in die Feder (11) eingeschraubt ist,
**dadurch gekennzeichnet, dass**
die Feder (11) mittels eines Abschnitts (12) mit einem verkleinerten Durchmesser, der als ein Kopplungsbauteil zum Einstellen der axialen Position der Feder (11) in Bezug auf die Halterung (7) dient, einstellbar an der Halterung (7) angeschraubt ist, so dass die Kalibriervorspannung der Feder (11) einstellbar ist, ohne dass **dadurch** die Wirklänge der Feder beeinflusst wird.

2. Einstellbares Ventil nach Anspruch 1, **dadurch gekennzeichnet, dass** die Feder (11) auch an das Kolbenbauteil (6) angeschraubt ist.

3. Einstellbares Ventil nach Anspruch 1, **dadurch gekennzeichnet, dass** die Feder (11) fest an dem Kolbenbauteil (6) befestigt ist.

## Revendications

1. Soupape réglable comportant un élément (6) de piston destiné à réguler le débit de fluide à travers la soupape, ladite soupape comportant un ressort hélicoïdal (11) agissant sur ledit élément (6) de piston et supporté par un arrêtoir réglable (7) vissé dans ledit ressort (11),
**caractérisée en ce que**
le ressort (11) est vissé de façon réglable sur l'arrêtoir (7) au moyen d'une partie (12) de diamètre réduit faisant fonction d'élément de couplage afin de régler la position axiale du ressort (11) par rapport audit arrêtoir (7), de sorte que la précharge de calibrage du ressort (11) est réglable sans que cela influe sur la longueur utile du ressort.

2. Soupape réglable selon la revendication 1,
**caractérisée en ce que** ledit ressort (11) est également vissé sur ledit élément (6) de piston.

3. Soupape réglable selon la revendication 1,
**caractérisée en ce que** ledit ressort (11) est ajusté de façon fixe sur ledit élément (6) de piston.
